# EUROPÄISCHE PATENTSCHRIFT

(11) **EP 2 156 455 B1**
(45) Veröffentlichungstag und Bekanntmachung des Hinweises auf die Patenterteilung: **21.12.2016**
(21) Anmeldenummer: 08735196.1
(22) Anmeldetag: 12.04.2008
(51) Int. Cl.: H01H 47/00

(54) **VORRICHTUNG UND VERFAHREN ZUM ERKENNEN DER ANSTEUERUNGSART FÜR EIN SPANNUNGS- ODER STROMAUSLÖSENDES SCHALTGERÄT**
DEVICE AND METHOD FOR IDENTIFYING THE TYPE OF CONTROL FOR A VOLTAGE- OR CURRENT-RELEASE SWITCHGEAR
DISPOSITIF ET PROCÉDÉ DE DÉTECTION DU MODE DE COMMANDE POUR UN COMMUTATEUR À DÉCLENCHEMENT DE TENSION OU D'INTENSITÉ

(30) Priorität: 04.06.2007 DE 102007026169
(43) Veröffentlichungstag der Anmeldung: 24.02.2010
(73) Patentinhaber: Eaton Electrical IP GmbH & Co. KG, 12529 Schönefeld (DE)
(72) Erfinder: MEID, Wolfgang, 56218 Mülheim-Kärlich (DE)
(74) Vertreter: Eaton IP Group EMEA
(86) Internationale Anmeldenummer: PCT/EP2008/002908
(87) Internationale Veröffentlichungsnummer: WO 2008/148441

(56) Entgegenhaltungen:
- EP-A- 1 009 005
- DE-A1- 4 311 883
- US-A- 5 450 334
- US-A- 5 610 579
- US-A- 5 818 128
- US-A1- 2003 160 517

## Beschreibung

Die Erfindung betrifft eine Vorrichtung und ein Verfahren zum Erkennen der Ansteuerungsart für einen Spannungs- oder Stromauslöser eines spannungs- oder stromauslösenden Schaltgeräts, enthaltend zumindest eine Steuereinheit mit zumindest zwei Steuereingängen.

Eine derartige Vorrichtung und ein solches Verfahren sind im Stand der Technik bekannt. Beispielsweise offenbart die EP 1 009 005 B1 eine Einrichtung zur Steuerung eines Elektromagneten zum Öffnen oder Schließen eines Schutzschalters mit lokaler und Fernsteuerung. Die Einrichtung umfasst zwei Stromversorgungsklemmen und eine Fernbetätigungsklemme sowie eine Vorort-Betätigungsklemme. In einem ersten Betätigungsmodus werden zwei Stromversorgungsklemmen über eine erstes Vorort-Betätigungsorgan mit einer Versorgungsspannungsquelle verbunden. In einem zweiten Betätigungsmodus werden die beiden Stromversorgungsklemmen direkt mit der Versorgungsspannungsquelle und die Vorort-Betätigungsklemme über ein zweites Vorort-Betätigungsorgan mit der einen Stromversorgungsklemme verbunden. Ferner ist ein Kommunikationsmodul vorgesehen. An zumindest einer Belegungsnachweisklemme sind Belegungsnachweismittel zur automatischen Erkennung des Anschlusses des Kommunikationsmoduls an die Fernbetätigungs- und Belegungsnachweisklemmen der Einrichtung vorgesehen. Die Ausschalt- bzw. Einschaltsteuerung des Leistungsschalters erfolgt entweder durch das zweite Vorort-Betätigungsorgan oder durch einen Steuerbefehl des Kommunikationsmoduls. Ferner umfasst die Einrichtung Mittel zum Vergleich einer die Spannung an den Stromversorgungsklemmen abbildende Größe mit einem festgelegten Schwellwert, Mittel zum Erkennen der Belegung der Fernbetätigungs- und Belegungsnachweisklemmen mit einem Kommunikationsmodul sowie Mittel zur Steuerung der Erregung mindestens einer Spule des Elektromagneten, wenn die abbildende Größe über dem Schwellwert liegt. Die Erregung der Spule erfolgt entweder bei fehlendem Belegungsnachweis durch ein Kommunikationsmodul automatisch oder bei Nachweis der Belegung, wenn außerdem ein Betätigungssignal an der Fernbetätigungsklemme oder der Vorort-Betätigungsklemme ansteht. Ferner ist ein ohmscher Spannungsteiler an die Stromversorgungsklemmen und zur Zwischenschaltung eines Gleichrichters sowie eine Mikroprozessorschaltung angeschlossen. Die Mikroprozessorschaltung enthält Vergleichs-, Belegungsnachweis- und Steuermittel. Die Vorort-Betätigungsklemme, die über das Vorort-Betätigungsorgan betätigt werden kann, ist mit ebenfalls mit der Mikroprozessorschaltung verbunden. Ein Transistor ist ausgangsseitig an der Mikroprozessorschaltung als elektronischer Unterbrecher angeschlossen, wobei die Spule drainseitig ebenfalls mit dem Transistor verbunden ist.

Gemäß der EP 1 009 005 B1 sind somit diverse Klemmen erforderlich, um die verschiedenen Ansteuerungsarten für den Schutzschalter realisieren zu können. Insbesondere ist hier ein Kommunikationsmodul vorgesehen, das dazu dient, die Einrichtung in einem Vorort-Modus und/oder Fernbedienungsmodus zu bedienen. In einem reinen Vorort-Modus ist außer dem einen Vorort-Betätigungsorgan noch ein zweites im Bereich der einen Stromversorgungsklemme vorgesehen, so dass die Einrichtung recht komplex aufgebaut ist.

Dokument US 2003/0160517 A1 beschreibt einen Zwei-Draht Leistungsschalter. Ein elektrischer Schalter umfasst einen manuellen Schalter und einen Hochfrequenzempfänger, die mit zwei Eingängen eines ODER-Gatters verbunden sind. Ein Ausgang des ODER-Gatters ist an eine Kontrolleinheit angeschlossen, die als Mikroprozessor realisiert sein kann. Die Kontrolleinheit steuert über einen Speicher ein Schaltelement.

Dokument US 5,818,128 A befasst sich mit einem drahtlosen Schaltsystem mit mehreren Positionen. Ein Signal eines Schaltsignalaktivierungsmittels und ein von einem Empfänger detektiertes Signal werden einem ODER-Gatter zugeleitet. Ein Ausgangssignal des ODER-Gatters wird über einen Verstärker und ein Flip-Flop einer Treiberschaltung zugeführt. Die Treiberschaltung steuert einen elektronischen Schalter.

Der vorliegenden Erfindung liegt nun die Aufgabe zugrunde, eine weniger komplex aufgebaute Vorrichtung zum Erkennen der Ansteuerungsart für einen Spannungs- oder Stromauslöser eines spannungs- oder stromauslösenden Schaltgeräts zu entwerfen.

Die Aufgabe wird durch eine Vorrichtung und ein Verfahren gemäß den unabhängigen Patentansprüchen gelöst. Weiterbildungen der Erfindung sind in den abhängigen Ansprüchen definiert.

In einer Ausführungsform ist in einer Vorrichtung eine Signalerfassungseinrichtung zum Erfassen des Signalzustands an zumindest einem Steuereingang der Steuereinheit und eine Einrichtung zum Sperren des zumindest einen steuersignalfreien Steuereingangs bei Vorliegen eines Steuersignals an einem Steuereingang vorgesehen. In einer Ausführungsform wird in einem Verfahren zum Erkennen der Ansteuerungsart der Signalzustand an den Steuereingängen der Steuereinheit zum Anzeigen der Betätigung des Spannungs- oder Stromauslösers erfasst und bei Vorliegen eines Steuersignals an einem Steuereingang der zumindest eine weitere Steuereingang gesperrt.

Dadurch werden eine Vorrichtung und ein Verfahren zum Erkennen der Ansteuerungsart für einen Spannungs- oder Stromauslöser eines spannungs- oder stromauslösenden Schaltgeräts geschaffen, bei denen weder ein Jumper benötigt wird, um die Ansteuerungsart für den Spannungs- oder Stromauslöser zu erkennen, noch ein komplexer Aufbau der Vorrichtung für das Erkennen der Ansteuerungsart, wie im Stand der Technik bekannt. Der Schaltungsaufwand kann dadurch minimiert und somit optimiert werden. Ferner stehen immer alle Ansteuerungsarten zur Verfügung und die jeweilige Ansteuerungsart wird automatisch erkannt. Ein zusätzliches Kommunikationsmodul ist hierfür im Unterschied zum Stand der Technik jedoch nicht erforderlich. Auf einfache Art und Weise wird vielmehr durch Abfragen des Signalzustandes eines Steuereingangs der Steuereinheit nach Spannungszuschaltung der Steuereinheit des Schaltgerätes die jeweilige Ansteuerungsart signalisiert. Liegt an dem einen Steuereingang ein Signal an zur Betätigung des Spannungs- oder Stromauslösers, ist keine weitere Betätigung über den zumindest einen weiteren Steuereingang mehr möglich. Vorteilhaft steht also einer der Steuereingänge mit dem Spannungs- oder Stromauslöser des Schaltgeräts in Verbindung. Bei Betätigung des Spannungs- oder Stromauslösers liegt somit ein Signal an diesem Steuereingang an, so dass der zumindest eine andere Steuereingang gesperrt wird. Eine Freigabe erfolgt erst wieder bei Wegfall des Signals an dem einen Steuereingang, dieser also wieder signalfrei wird.

Vorteilhaft ist eine Einrichtung zur Freigabe des zumindest einen anderen Steuereingangs bei Wegfall des Signals an dem einen Steuereingang vorgesehen. Bei Wegfall des Signals an dem einen Steuereingang wird der zumindest eine weitere Steuereingang freigeschaltet. Hierdurch ist wieder eine Befehlsgabe an diesen einen weiteren und natürlich auch an dem anderen nun wieder signalfreien Steuereingang möglich. Der zumindest eine weitere Steuereingang kann insbesondere mit einer Spannung ungleich der Versorgungsspannung betätigt werden, wie beispielsweise einer Spannung von 24 Volt. Der andere Steuereingang wird hingegen vorteilhaft mit der Versorgungsspannung beaufschlagt. Vorteilhaft ist eine Schalteinrichtung vorgesehen, mittels derer die Zuschaltung der Versorgungsspannung an diesen Steuereingang erfolgen kann.

Vorteilhaft umfasst die Steuereinheit zumindest einen Mikrocontroller und somit ein kostengünstiges, jedoch wirksames und leicht zu programmierendes Element.

Als weiter vorteilhaft erweist es sich, wenn der eine Steuereingang mit der Steuereinheit über einen selbstsperrenden Feldeffekttransistor verbunden ist. Durch die Verwendung eines selbstsperrenden Feldeffekttransistors, insbesondere eines n-Kanal MOSFETs, kann das Fließen eines Drain-Stroms verhindert werden, wenn die Gate-Source-Spannung kleiner als die Schwellspannung des Transistors ist, wobei der Steuereingang auf dem Gate-Anschluss des Feldeffekttransistors liegt, der Drain-Anschluss mit der Steuereinheit verbunden ist und der Source-Anschluss auf Masse liegt.

Vorteilhaft sind alle, insbesondere zwei, Steuereingänge mit der Steuereinheit über jeweils einen selbstsperrenden Feldeffekttransistor, insbesondere selbstsperrenden n-Kanal MOSFET, verbunden. Durch die Verwendung der selbstsperrenden Feldeffekttransistoren kann somit die gewünschte Sperrwirkung und Freigabe des zumindest einen weiteren Steuereingangs bei Vorliegen eines Steuersignals an dem anderen Steuereingang bewirkt werden.

Anstelle einer galvanischen Verbindung zwischen dem Steuereingang und der Steuereinheit über einen solchen selbstsperrenden Feldeffekttransistor kann alternativ eine optische Verbindung zwischen dem einen weiteren Steuereingang und der Steuereinheit vorgesehen werden. Hierbei ist eine galvanische Trennung zwischen dem Steuereingang und der Steuereinheit selbst möglich, so dass diese nicht durch eventuelle Überspannungen oder hohe Ströme beschädigt werden kann.

Ein spannungs- oder stromauslösendes Schaltgerät, das eine solche Vorrichtung zum Erkennen der Ansteuerungsart enthält, kann durch eine Signalerfassungseinrichtung in Abhängigkeit von dem Signalzustand an einem oder den Steuereingängen einer Steuereinheit der Ansteuerungsart-Erkennungsvorrichtung als Spannungs- oder Stromauslöser betrieben werden.

Zur näheren Erläuterung der Erfindung werden im Folgenden Ausführungsbeispiele von dieser näher anhand der Zeichnungen beschrieben. Diese zeigen in:
- Figur 1: eine Prinzipskizze einer ersten Ausführungsform einer erfindungsgemäßen Vorrichtung zum Erkennen der Ansteuerungsart für einen Spannungs- oder Stromauslöser eines Schaltgeräts,
- Figur 2: eine Prinzipskizze einer zweiten Ausführungsform einer Vorrichtung zum Erkennen der Ansteuerungsart für einen Spannungs- oder Stromauslöser eines Schaltgeräts, und
- Figur 3: eine Prinzipskizze einer dritten Ausführungsform einer Vorrichtung zum Erkennen der Ansteuerungsart für einen Spannungs- oder Stromauslöser eines Schaltgeräts.

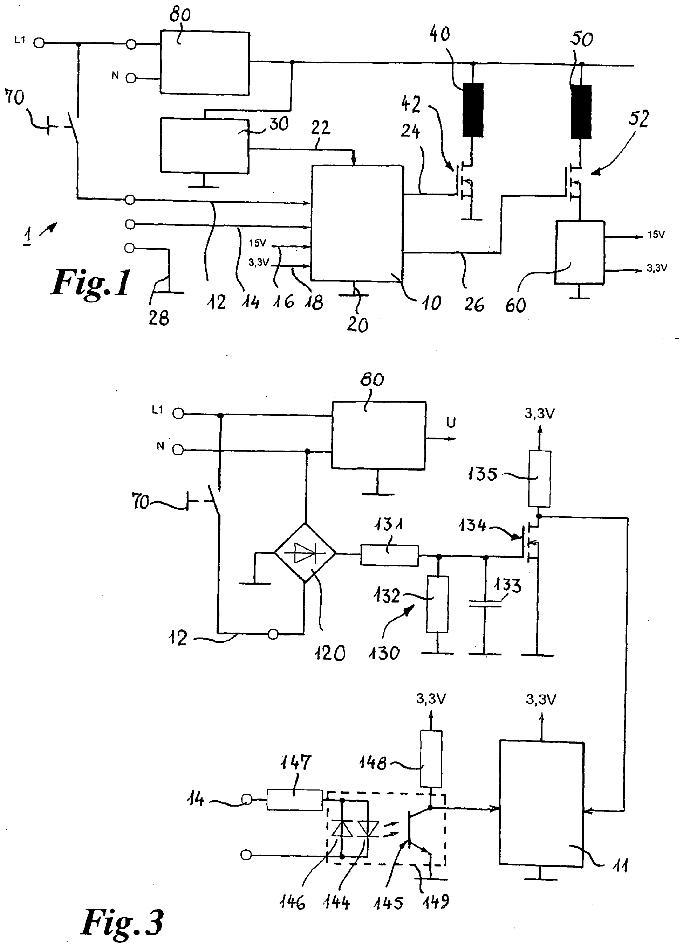

In Figur 1 ist eine Prinzipskizze einer Schaltungsanordnung einer Vorrichtung 1 zum Erkennen der Ansteuerungsart für einen Spannungs- oder Stromauslöser eines spannungs- oder stromauslösenden Schaltgeräts gezeigt. Diese umfasst eine Steuereinheit 10 mit zwei Steuereingängen 12, 14. Ferner weist die Steuereinheit 10 einen 15-Volt-Anschluss 16 und einen 3,3-Volt-Anschluss 18 auf. Die Steuereinheit 10 ist ferner mit einem Masseanschluss 20, einem Anschluss 22 zum Verbinden mit einer Spannungsmesseinrichtung 30 sowie zwei Ausgängen 24, 26 versehen, die zu einer Anzugsspule 40 und einer Haltespule 50 führen. Beiden Spule 40, 50 ist jeweils ein selbstsperrender Feldeffekttransistor 42, 52, hier als n-Kanal MOSFET ausgebildet, vorgeschaltet.

Die Vorrichtung 1 umfasst ferner ein Netzteil 60, das sourceseitig an den selbstsperrenden der Haltespule 50 vorgeschalteten Feldeffekttransistor 52 angeschlossen ist. Gateseitig ist der Feldeffekttransistor 52 mit der Steuereinheit 10 und drainseitig mit der Haltespule 50 verbunden. Das Netzteil 60 stellt sowohl 15 Volt als auch 3,3 Volt zur Verfügung.

Der Steuereingang 12 ist über einen Schalter 70 mit der Versorgungsspannungsleitung L1 verbunden. Über eine Filterungs- und Gleichrichteinrichtung 80 wird eine gefilterte und gleichgerichtete Versorgungsspannung für den Anschluss der Anzugsspule 40 und der Haltespule 50 und der Spannungsmesseinrichtung 30 zur Verfügung gestellt.

Ferner ist für den zweiten Steuereingang 14 noch ein Masseanschluss 28 vorgesehen.

Der Steuereingang 12 kann über die Betätigung des Schalters 70 mit Versorgungsspannung beaufschlagt werden, wohingegen der Steuereingang 14 mit einer Spannung ungleich der Versorgungsspannung betätigt wird. Beispielsweise kann hier eine Spannung von 24 Volt angelegt werden.

Die Steuereinheit 10 erkennt in Abhängigkeit von dem Signalzustand am Steuereingang 12 die jeweilige Ansteuerungsart für den Spannungs- oder Stromauslöser. Nach der Betätigung des Schalters 70, also der Spannungszuschaltung an den Steuereingang 12, wird das Signal am Steuereingang 12 von der Steuereinheit 10 erfasst und auf die Ansteuerungsart (Spannungs- oder Stromauslöser-Betätigung) geschlossen. Sobald am Steuereingang 12 ein Signal anliegt, wird eine Betätigung über den Steuereingang 14 gesperrt, so dass dieser kein Steuersignal mehr an die Steuereinheit 10 senden kann. Sobald das Steuersignal am Steuereingang 12 nicht mehr vorliegt, wird der Steuereingang 14 wieder zur Befehlsgabe freigeschaltet. Liegt am Steuereingang 12 kein Signal vor, ist solange eine Befehlsgabe am Steuereingang 12 oder 14 möglich, bis an einem der beiden Steuereingänge 12, 14 ein Signal erkannt wird. Die Steuereinheit 10 ist so ausgebildet, dass immer dann, wenn an einem der beiden Steuereingänge 12,14 ein Signal erkannt wird, der andere Eingang für die Zeit der Betätigung des mit dem Signal beaufschlagten Steuereingangs gesperrt wird. Hierbei signalisiert jedoch der Steuereingang 12 bei Spannungszuschaltung durch Betätigen des Schalters 70 der Steuereinheit 10 die jeweilige Ansteuerungsart für den Spannungs- oder Stromauslöser. Die Erkennung der Ansteuerungsart erfolgt somit automatisch und es stehen zu jeder Zeit alle Ansteuerungsarten zur Verfügung.

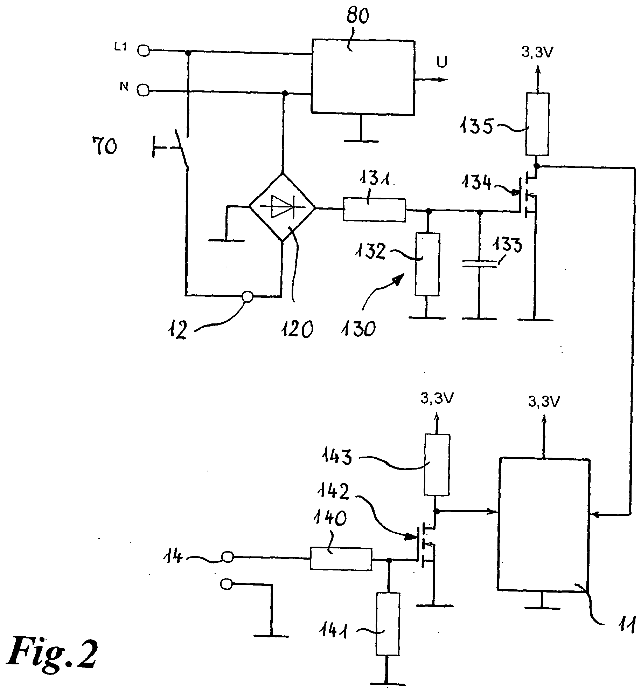

Figur 2 zeigt eine detailliertere Schaltungsanordnung für die beiden Steuereingänge 12 und 14 und die Steuereinheit 10. Die Steuereinheit 10 umfasst in dieser Ausführungsvariante einen Mikrocontroller 11. Zwischen dem Steuereingang 12 und dem Mikrocontroller ist eine Gleichrichterschaltung 120 zum Gleichrichten des Signals am Steuereingang 12 sowie ein RC-Glied 130 geschaltet, das zwei Widerstände 131, 132 und einen Kondensator 133 umfasst. Hierdurch wird ein Spannungsteiler bzw. eine Filterung vorgesehen. Alternativ könnte hier ein Optokoppler vorgesehen werden.

Ferner ist ein selbstsperrender Feldeffekttransistor (n-Kanal-MOSFET) 134 vorgesehen, an den das RC-Glied 130 gateseitig angeschlossen ist. Sourceseitig liegt der Feldeffekttransistor 134 auf Masse und drainseitig ist ein weiterer Widerstand 135, der seinerseits an 3,3 Volt angeschlossen ist, sowie ein Anschluss an den Mikrocontroller 11 vorgesehen.

Der zweite Steuereingang 14 ist über Widerstände 140, 141 gateseitig an einen selbstsperrenden Feldeffekttransistor (n-Kanal-MOSFET) 142 angeschlossen. Der Feldeffekttransistor 142 liegt sourceseitig auf Masse und ist drainseitig über einen Widerstand 143 an 3,3V gelegt. Ferner ist er drainseitig mit dem Mikrocontroller 11 verbunden.

Insbesondere durch das Vorsehen der selbstsperrenden Feldeffekttransistoren 134 und 142 sind eine Freigabe und ein Sperren des jeweils einen Steuereingangs 12 bzw. 14 bei Anliegen eines Signals an dem anderen Steuereingang 12 bzw. 14 möglich. Beide Feldeffekttransistoren werden dabei in Sourceschaltung betrieben. Die Feldeffekttransistoren dienen der Signalanpassung.

Eine alternative Lösung betreffend die Ausführung des die beiden Steuereingänge 12, 14 und die Steuereinheit 10 umfassenden Teils der Vorrichtung ist in Figur 3 gezeigt. Hierbei ist der erste Steuereingang 12 entsprechend der Ausführungsform in Figur 2 ausgebildet. Bei dem Steuereingang 14 ist anstelle einer galvanischen Verbindung zwischen dem Steuereingang 14 und der Steuereinheit 10 bzw. dem Mikrocontroller 11 eine optische Verbindung über einen Optokoppler 149 vorgesehen, der eine Fotodiode 144 als Sender und einen entsprechenden Fototransistor 145 als Empfänger umfasst. Der Fotodiode 144 parallel gegengeschaltet ist eine zweite Diode 146. Ferner ist ein Widerstand 147 diesen beiden Dioden vorgeschaltet. Der Fototransistor 145 bzw. die Fotoduodiode, da der Fototransistor basisseitig nicht herausgeführt ist, dient als Fotoempfänger. Er ist kollektorseitig über einen Widerstand 148 an 3,3V gelegt und mit dem Mikrocontroller 11 verbunden. Emitterseitig ist der Fototransistor 145 auf Masse gelegt. Die optische Verbindung ermöglicht es, dass eine galvanische Trennung zwischen Steuereingang 14 und Steuereinheit bzw. Mikrocontroller stattfinden kann, wenn beispielsweise aus Sicherheitsgründen eine solche vermieden werden sollte. Da lediglich das Anliegen eines Signals an dem Steuereingang 14 abgefragt wird, ist ein Anlegen einer höheren Spannung hier nicht erforderlich, so dass das Abfragen eines Signals über eine optische Verbindung bereits ausreicht.

Neben den im Vorstehenden beschriebenen und in den Zeichnungen gezeigten Ausführungsformen von Vorrichtungen zum Erkennen der Ansteuerungsart für einen Spannungs- oder Stromauslöser eines spannungs- bzw. stromauslösenden Schaltgeräts können noch zahlreiche weitere vorgesehen werden, bei denen jeweils eine Signalerfassungseinrichtung zum Erfassen des Signalzustandes zumindest eines ersten Steuereingangs und eine Einrichtung zum Sperren des zumindest einen weiteren Steuereingangs bei Vorliegen eines Signals an dem ersten Steuereingang vorgesehen ist. Die Verbindung zwischen den Steuereingängen und der Steuereinheit kann dabei galvanisch oder nicht galvanisch erfolgen, da lediglich die Signalgabe an den Steuereingängen abgefragt wird.

### Bezugszeichenliste

- 1: Vorrichtung zum Erkennen der Ansteuerungsart
- 10: Steuereinheit
- 11: Mikrocontroller
- 12: erster Steuereingang
- 14: zweiter Steuereingang
- 16: 15V-Anschluss
- 18: 3,3V-Anschluss
- 20: Masseanschluss
- 22: Anschluss
- 24: Ausgang
- 26: Ausgang
- 28: Masseanschluss
- 30: Spannungsmesseinrichtung
- 40: Anzugsspule
- 42: FET
- 50: Haltspule
- 52: FET
- 60: Netzteil
- 70: Schalter
- 80: Filterungs- und Gleichrichteinrichtung
- 120: Gleichrichterschaltung
- 130: RC-Glied
- 131: Widerstand
- 132: Widerstand
- 133: Kondensator
- 134: FET
- 135: Widerstand
- 140: Widerstand
- 141: Widerstand
- 142: FET
- 143: Widerstand
- 144: Fotodiode
- 145: Fototransistor
- 146: Diode
- 147: Widerstand
- 148: Widerstand
- 149: Optokoppler
- L1: Versorgungsspannungsleitung

## Patentansprüche

1. Vorrichtung (1) zum Erkennen der Ansteuerungsart für einen Spannungs- oder Stromauslöser eines spannungs- oder stromauslösenden Schaltgeräts, enthaltend zumindest eine Steuereinheit (10) mit zumindest zwei Steuereingängen (12, 14),
wobei eine Signalerfassungseinrichtung (10,11) zum Erfassen des Signalzustands an zumindest einem Steuereingang (12,14) der Steuereinheit (10,11) und eine Einrichtung (134, 142, 145) zum Sperren des zumindest einen steuersignalfreien Steuereingangs (14, 12) bei Vorliegen eines Steuersignals an einem Steuereingang (12,14) vorgesehen ist, und
wobei die Vorrichtung (1) einen Schalter (70) umfasst und die Steuereinheit (10) einen Mikrocontroller (11) mit einem ersten und einen zweiten Eingang umfasst,
wobei ein Steuereingang (12) über den Schalter (70) mit einer Versorgungsspannungsleitung (L1) verbunden ist,
**dadurch gekennzeichnet, dass** die Steuereinheit (10) umfasst:
- eine Gleichrichterschaltung (120), ein RC-Glied (130), das zwei Widerstände (131, 132) und einen Kondensator (133) umfasst, und einen selbstsperrenden Feldeffekttransistor (134), wobei zwischen dem Steuereingang (12) und dem ersten Eingang des Mikrocontrollers (11) die Gleichrichterschaltung (120) zum Gleichrichten des Signals am Steuereingang (12) sowie das RC-Glied (130) derart geschaltet sind, dass an den selbstsperrenden Feldeffekttransistor (134) das RC-Glied (130) gateseitig angeschlossen ist, sourceseitig der selbstsperrende Feldeffekttransistor (134) auf Masse liegt und drainseitig ein weiterer Widerstand (135) sowie ein Anschluss an den ersten Eingang des Mikrocontrollers (11) vorgesehen sind, und
- einen Optokoppler (149), wobei zwischen einem weiteren Steuereingang (14) und dem zweiten Eingang des Mikrocontrollers (11) eine optische Verbindung über den Optokoppler (149) vorgesehen ist, oder
- einen weiteren selbstsperrenden Feldeffekttransistor (142), wobei der weitere Steuereingang (14) über Widerstände (140, 141) gateseitig an den weiteren selbstsperrenden Feldeffekttransistor (142) angeschlossen ist, der sourceseitig auf Masse liegt und drainseitig mit dem zweiten Eingang des Mikrocontrollers (11) verbunden ist.

2. Vorrichtung (1) nach Anspruch 1,
**dadurch gekennzeichnet, dass**
der eine Steuereingang (12) mit dem Spannungs- oder Stromauslöser in Verbindung steht.

3. Vorrichtung (1) nach Anspruch 1 oder 2,
**dadurch gekennzeichnet, dass**
eine Einrichtung zur Freigabe des zumindest einen anderen Steuereingangs (14, 12) bei Wegfall des Signals an dem einen Steuereingang (12,14) vorgesehen ist.

4. Vorrichtung (1) nach einem der vorstehenden Ansprüche,
**dadurch gekennzeichnet, dass**
eine galvanische Verbindung (131, 134, 140, 142) zwischen dem einen Steuereingang (12,14) und der Steuereinheit (10,11) vorgesehen ist.

5. Vorrichtung (1) nach einem der vorstehenden Ansprüche,
**dadurch gekennzeichnet, dass**
der eine Steuereingang (12) mit Versorgungsspannung und der zumindest eine andere Steuereingang (14) mit einer Spannung ungleich der Versorgungsspannung beaufschlagbar ist.

6. Spannungs- oder stromauslösendes Schaltgerät enthaltend eine Vorrichtung (1) nach einem der vorstehenden Ansprüche, wobei das spannungs- oder stromauslösende Schaltgerät durch eine Signalerfassungseinrichtung (10,11) in Abhängigkeit von dem Signalzustand an einem oder den Steuereingängen (12, 14) einer Steuereinheit (10) der Vorrichtung als Spannungs- oder Stromauslöser betreibbar ist.

7. Verfahren zum Erkennen der Ansteuerungsart für einen Spannungs- oder Stromauslöser eines spannungs- oder stromauslösenden Schaltgeräts, enthaltend zumindest eine Steuereinheit (10) mit zumindest zwei Steuereingängen (12, 14),
wobei der Signalzustand an den Steuereingängen (12, 14) der Steuereinheit (10, 11) erfasst und bei Vorliegen eines Steuersignals an einem Steuereingang (12, 14) der zumindest eine weitere Steuereingang (14, 12) gesperrt wird, und
wobei die Steuereinheit (10) einen Mikrocontroller (11) mit einem ersten und einen zweiten Eingang umfasst,
**dadurch gekennzeichnet,**
**dass** ein Steuereingang (12) über einen Schalter (70) mit einer Versorgungsspannungsleitung (L1) verbunden ist und die Steuereinheit (10) umfasst:
- eine Gleichrichterschaltung (120), ein RC-Glied (130), das zwei Widerstände (131, 132) und einen Kondensator (133) umfasst, und einen selbstsperrenden Feldeffekttransistor (134), wobei zwischen dem Steuereingang (12) und dem ersten Eingang des Mikrocontrollers (11) die Gleichrichterschaltung (120) zum Gleichrichten des Signals am Steuereingang (12) sowie das RC-Glied (130) derart geschaltet sind, dass an den selbstsperrenden Feldeffekttransistor (134) das RC-Glied (130) gateseitig angeschlossen ist, sourceseitig der selbstsperrende Feldeffekttransistor (134) auf Masse liegt und drainseitig ein weiterer Widerstand (135) sowie ein Anschluss an den ersten Eingang des Mikrocontrollers (11) vorgesehen sind, und
- einen Optokoppler (149), wobei zwischen einem weiteren Steuereingang (14) und dem zweiten Eingang des Mikrocontrollers (11) eine optische Verbindung über den Optokoppler (149) vorgesehen ist, oder
- einen weiteren selbstsperrenden Feldeffekttransistor (142), wobei der weitere Steuereingang (14) über Widerstände (140, 141) gateseitig an den weiteren selbstsperrenden Feldeffekttransistor (142) angeschlossen ist, der sourceseitig auf Masse liegt und drainseitig mit dem zweiten Eingang des Mikrocontrollers (11) verbunden ist.

8. Verfahren nach Anspruch 7,
**dadurch gekennzeichnet, dass**
das Erfassen des Signalzustands an dem einen Steuereingang (12) der Steuereinheit (10,11) nach Spannungszuschaltung an diesen Steuereingang (12) erfolgt.

9. Verfahren nach einem der Ansprüche 7 oder 8,
**dadurch gekennzeichnet, dass**
bei Wegfall des Signals an dem einen Steuereingang (12) der zumindest eine weitere Steuereingang (14) frei geschaltet wird.

10. Verfahren nach einem der Ansprüche 7 bis 9,
**dadurch gekennzeichnet, dass**
die Signalübertragung von zumindest einem Steuereingang (12, 14) an die Steuereinheit (10, 11) galvanisch und/oder auf optischem Wege erfolgt.

## Claims

1. Device (1) for identifying the tripping method for a voltage or current trip of a voltage or current breaker, comprising at least one control unit (10) with at least two control inputs (12, 14), wherein a signal identification device (10, 11) for identifying the signal state at least one control input (12, 14) of the control unit (10,11) is provided, and a device (134, 142, 145) for blocking the at least one control-signal free control input (14, 12) when a control signal is applied to a control input (12,14), and wherein the device (1) comprises a switch (70), and the control unit (10) comprises a microcontroller (11) with a first and a second input, wherein a control input (12) is connected to a voltage supply line (L1) via the switch (70),
**characterised in that** the control unit (10) comprises:
- a rectifier circuit (120), an RC network (130) comprising two resistors (131, 132) and a capacitor (133), and a self-blocking field effect transistor (134), wherein the rectifier circuit (120) for rectifying the signal at the control input (12), and the RC network (130) are connected in such a way between the control input (12) and the first input of the microcontroller (11), that the RC network (130) is connected to the gate of the self-blocking field-effect transistor (134), the source of the self-blocking field-effect transistor (134) is connected to earth and the drain is connected to a further resistor (135) and to the first input of the microcontroller (11), and
- an optical coupler (149), wherein an optical connection via the optical coupler (149) is provided between a further control input (14) and the second input of the microcontroller (11), or
- a further self-blocking field effect transistor (142), wherein the further control input (14) is connected to the gate of the further self-blocking field effect transistor (142) via resistors (140, 141), the source being connected to earth and the drain being connected to the second input of the microcontroller (11).

2. Device (1) according to claim 1, **characterised in that** the one control input (12) is connected to the voltage or current breaker.

3. Device (1) according to claim 1 or 2, **characterised in that** a device for releasing the at least one other control input (14, 12) is provided in the event of cessation of the signal at the one control input (12, 14).

4. Device (1) according to any of the previous claims, **characterised in that** a galvanic connection (131, 134, 140, 142) is provided between the one control input (12,14) and the control unit (10,11).

5. Device (1) according to any of the previous claims, **characterised in that** the supply voltage can be applied to the one control input (12) and a voltage which is not the same as the supply voltage can be applied to the at least one other control input (14).

6. Voltage or current breaker containing a device (1) according to any of the previous claims, in which the voltage or current breaker can be operated as a voltage or current breaker tripped by a signal identification device (10, 11) as a function of the signal state at one or the control inputs (12, 14) of a control unit (10) of the device.

7. Method for identifying the tripping method of a voltage or current trip of a voltage or current breaker, comprising at least one control unit (10) with at least two control inputs (12, 14), wherein the signal state at the control inputs (12,14) of the control unit (10,11) is detected and if a control signal is present at one control input (12, 14), then at least the one other control input (14, 12) is blocked, the control unit (10) comprising a microcontroller (11) with a first and a second input,
**characterised in that**
a control input (12) is connected to a supply voltage line (L1) via a switch (70), and the control unit (10) comprises:
- a rectifier circuit (120), an RC network (130) comprising two resistors (131, 132) and a capacitor (133), and a self-blocking field effect transistor (134), wherein the rectifier circuit (120) for rectifying the signal at the control input (12), and the RC network (130) are connected in such a way between the control input (12) and the first input of the microcontroller (11), that the RC network (130) is connected to the gate of the self-blocking field-effect transistor (134), the source of the self-blocking field-effect transistor (134) is connected to earth and the drain is connected to a further resistor (135) and to the first input of the microcontroller (11), and
- an optical coupler (149), wherein an optical connection via the optical coupler (149) is provided between a further control input (14) and the second input of the microcontroller (11), or
- a further self-blocking field effect transistor (142), wherein the further control input (14) is connected to the gate of the further self-blocking field effect transistor (142) via resistors (140, 141), the source being connected to earth and the drain being connected to the second input of the microcontroller (11).

8. Method according to claim 7, **characterised in that** the signal state identification at the one control input (12) of the control unit (10,11) takes place after a voltage is switched to this control input (12).

9. Method according to any one of claims 7 or 8, **characterised in that** when the signal at the one control input (12) ceases, the at least one further control input (14) is activated.

10. Method as in one of claims 7 to 9, **characterised in that** the signal transmission from at least one control input (12,14) to the control unit (10,11) takes place galvanically and/or optically.

## Revendications

1. Dispositif (1) servant à identifier le type de pilotage pour un déclencheur de tension ou de courant d'un appareil de commutation à déclenchement de tension ou de courant, contenant au moins une unité de commande (10) avec au moins deux entrées de commande (12,14), dans lequel un système de détection de signaux (10,11) servant à détecter l'état des signaux au niveau au moins d'une entrée de commande (12, 14) de l'unité de commande (10, 11) est prévu et un système (134, 142, 145) servant à bloquer l'au moins une entrée de commande (14, 12) dépourvue de signaux de commande en présence d'un signal de commande au niveau d'une entrée de commande (12, 14) est prévu, et
dans lequel le dispositif (1) comprend un commutateur (70) et l'unité de commande (10) comprend un microcontrôleur (11) avec une première et une deuxième entrée,
dans lequel une entrée de commande (12) est reliée par l'intermédiaire du commutateur (70) à une ligne de tension d'alimentation (L1), **caractérisé en ce que** l'unité de commande (10) comprend :
- un circuit redresseur (120), un organe RC (130), qui comprend deux résistances (131, 132) et un condensateur (133), et un transistor à effet de champ (134) autobloquant, dans lequel le circuit redresseur (120) servant à redresser le signal au niveau de l'entrée de commande (12) ainsi que l'organe RC (130) sont branchés entre l'entrée de commande (12) et la première entrée du microcontrôleur (11) de telle manière que l'organe RC (130) est raccordé côté passerelle au transistor à effet de champ (134) autobloquant, que le transistor à effet de champ (134) autobloquant est à la masse côté source et qu'une autre résistance (135) ainsi qu'un raccord à la première entrée du microcontrôleur (11) sont prévus côté drain, et
- un photocoupleur (149), dans lequel une liaison optique est prévue par l'intermédiaire du photocoupleur (149) entre une autre entrée de commande (14) et la deuxième entrée du microcontrôleur (11), ou
- un autre transistor à effet de champ (142) autobloquant, dans lequel l'autre entrée de commande (14) est raccordée côté passerelle par l'intermédiaire de résistances (140, 141) à l'autre transistor à effet de champ (142) autobloquant, qui est à la masse côté source et qui est relié côté drain à la deuxième entrée du microcontrôleur (11).

2. Dispositif (1) selon la revendication 1,
**caractérisé en ce que**
une entrée de commande (12) est en liaison avec le déclencheur de tension ou de courant.

3. Dispositif (1) selon la revendication 1 ou 2,
**caractérisé en ce que**
un système servant à débloquer l'au moins une autre entrée de commande (14, 12) est prévu en cas de suppression du signal au niveau de l'une des entrées de commande (12, 14).

4. Dispositif (1) selon l'une quelconque des revendications précédentes,
**caractérisé en ce que**
une liaison (131, 134, 140, 142) galvanique est prévue entre une des entrées de commande (12, 14) et l'unité de commande (10, 11).

5. Dispositif (1) selon l'une quelconque des revendications précédentes,
**caractérisé en ce que**
une entrée de commande (12) peut être soumise à l'action d'une tension d'alimentation, et l'au moins une autre entrée de commande (14) peut être soumise à l'action d'une tension qui est différente de la tension d'alimentation.

6. Appareil de commutation à déclenchement de tension ou de courant contenant un dispositif (1) selon l'une quelconque des revendications précédentes, dans lequel l'appareil de commutation à déclenchement de tension ou de courant peut fonctionner en tant que déclencheur de tension ou de courant par un système de détection de signaux (10,11) en fonction de l'état des signaux au niveau d'une ou des entrées de commande (12, 14) d'une unité de commande (10) du dispositif.

7. Procédé servant à identifier le type de pilotage pour un déclencheur de tension ou de courant d'un appareil de commutation à déclenchement de tension ou de courant, contenant au moins une unité de commande (10) avec au moins deux entrées de commande (12, 14),
dans lequel l'état des signaux au niveau des entrées de commande (12, 14) de l'unité de commande (10, 11) est détecté et l'au moins une autre entrée de commande (14, 12) est bloquée en présence d'un signal de commande au niveau d'une entrée de commande (12, 14), et
dans lequel l'unité de commande (10) comprend un microcontrôleur (11) avec une première et une deuxième entrée,
**caractérisé en ce**
**qu'**une entrée de commande (12) est reliée, par l'intermédiaire d'un commutateur (70), à une ligne de tension d'alimentation (L1), et l'unité de commande (10) comprend :
- un circuit redresseur (120), un organe RC (130), qui comprend deux résistances (131, 132) et un condensateur (133), et un transistor à effet de champ (134) autobloquant, dans lequel le circuit redresseur (120) servant à redresser le signal au niveau de l'entrée de commande (12) ainsi que l'organe RC (130) sont branchés entre l'entrée de commande (12) et la première entrée du microcontrôleur (11) de telle manière que l'organe RC (130) est raccordé côté passerelle au transistor à effet de champ (134) autobloquant, que le transistor à effet de champ (134) autobloquant est à la masse côté source et qu'une autre résistance (135) ainsi qu'un raccord à la première entrée du microcontrôleur (11) sont prévus côté drain, et
- un photocoupleur (149), dans lequel une liaison optique est prévue par l'intermédiaire du photocoupleur (149) entre une autre entrée de commande (14) et la deuxième entrée du microcontrôleur (11), ou
- un autre transistor à effet de champ (142) autobloquant, dans lequel l'autre entrée de commande (14) est raccordée côté passerelle par l'intermédiaire de résistances (140, 141) à l'autre transistor à effet de champ (142) autobloquant, qui est à la masse côté source et qui est relié côté drain à la deuxième entrée du microcontrôleur (11).

8. Procédé selon la revendication 7,
**caractérisé en ce que**
la détection de l'état des signaux au niveau de l'une des entrées de commande (12) de l'unité de commande (10, 11) est effectuée après l'activation de la tension au niveau de ladite entrée de commande (12).

9. Procédé selon l'une quelconque des revendications 7 ou 8,
**caractérisé en ce que**
en cas de suppression du signal au niveau de l'une des entrées de commande (12), l'au moins une autre entrée de commande (14) est commutée de manière à être libre.

10. Procédé selon l'une quelconque des revendications 7 à 9,
**caractérisé en ce que**
la transmission de signaux d'au moins une entrée de commande (12, 14) à l'unité de commande (10, 11) est effectuée de manière galvanique et/ou par voie optique.
